(19)

Europäisches
Patentamt
European
Patent Office
Office européen
des brevets

(11) **EP 3 763 838 A1**

(12) **EUROPEAN PATENT APPLICATION**

(43) Date of publication:
**13.01.2021 Bulletin 2021/02**

(51) Int Cl.:
*C22B 3/24* (2006.01)  *C22B 3/00* (2006.01)
*C22B 11/00* (2006.01)

(21) Application number: **19185363.9**

(22) Date of filing: **10.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Grissemann, Ernst
6170 Zirl (AT)**

(72) Inventor: **Grissemann, Ernst
6170 Zirl (AT)**

(74) Representative: **Patentanwaltskanzlei
Matschnig & Forsthuber OG
Biberstraße 22
Postfach 36
1010 Wien (AT)**

(54) **DEVICES AND METHODS FOR GOLD EXTRACTION FROM HEAVY METAL CONTAINING
FLUIDS**

(57)  The present invention relates to a gold extraction set-up (100, 200, 300, 400a, 400b, 500a, 500b, 500c) for gold extraction from natural, industrial or mining fluids having a volume of greater than 500 m$^3$, wherein the gold extraction set-up comprises i-a.) a tank (101, 201, 301, 401a, 401b, 501a, 501b, 501c) comprising a tank chamber (102, 202, 302), at least one feed line (103, 203,303) for feeding a natural, industrial or mining fluid into the tank chamber (102, 202, 302) via an inlet (104, 204, 304), and at least one discharge line (105, 205, 305) for discharging the fluid out of the tank chamber (102, 202, 302) via an outlet (106, 206, 306), or i-b.) a natural or artificial acid mine drainage fluid body (37,54) having a volume of greater than 500 m$^3$, and ii.) gold extraction means (107, 207, 307) removably positionable within the tank chamber (102, 202, 302) or the acid mine drainage fluid body (37, 54) and comprising at least one gold extraction material (108, 208, 308) selected from the group consisting of polyamides and derivatives thereof, and mammal hair. The invention also relates to metal extraction plants (430, 530) and gold extraction methods using a said gold extraction set-up (100, 200, 300, 400a, 400b, 500a, 500b, 500c).

Fig. 1a

EP 3 763 838 A1

**Description**

The present invention relates to gold extraction set-ups for gold extraction from natural, industrial or mining fluids having a volume of greater than 500 m$^3$, to methods for extracting and recovering gold from a natural, industrial or mining fluid having a volume of greater than 500 m$^3$ by means of such gold extraction set-ups, to metal extraction plants comprising such gold extraction set-ups. The present invention also relates to floating cartridge units for gold extraction, which may be used in the gold extraction set-ups and methods according to the present invention.

Mining activities generally leave scarred landscapes with large open quarries, wide-spread dumps, tailings sites (sludges) as well as acid mine drainage (AMD), which are mine effluents in which toxic heavy metals and gold are still relatively abundant, although at levels that are uneconomic to extract with conventional techniques.

The limitations and disadvantages of the presently known and applied technologies are that gold is extracted by a cyanide leaching and a successive adsorption on activated charcoal (Heinen, et al., 1978; Romero and Sampaio, 1993; Anonymous, 2016a). All gold-carrying solids must come in contact with the cyanide solution which then mobilises gold and other metals into the fluid. When these fluids are pumped through activated charcoal, the activated charcoal adsorbs gold on its grain surface.

Since not only gold is leached but other metals as well, the highly toxic cyanide has to be used in much larger quantities than necessary for gold extraction. Even if the known process is relatively cheap, the use of activated charcoal goes hand in hand with relatively large material volumes, because adsorption occurs on the charcoal's surfaces only and also other metals, such as silver, are collected (competing surface loading processes).

Moreover, effluents from the leaching process have to be deposited in special reservoirs, as it is quite expensive to destroy the very stable cyanide compounds. In these deposits, the acidity (pH) of the cyanide comprising fluids has to be monitored and controlled properly over decades, otherwise, cyanide will exit the reservoir as hazardous CN gas, thus, constituting a permanent hazard to inhabitants in the local area.

Breaking reservoir dams have already polluted vast areas around the world, typical industrial accident sites are:

- Baia Mare cyanide spill (Romania, 2000), where huge amounts of cyanide sludges contaminated the Danube river,

- Ok Tedi (1999), one of the largest gold mines in the world in Papua New Guinea, where mine workers were killed by local inhabitants who were severely affected by cyanide pollution, and

- Cyanide spill from the Golden King mine (Colorado/USA, 2015).

Low gold levels are not dealt with in any of the gold-winning facilities, because of a very large throughput of rocks to leach, which makes operations too expensive.

It is an object of the present invention to provide novel devices, set-ups, methods and technologies for selective extraction of gold, which are more environmentally friendly and will render the currently applied and hazardous cyanide leaching processes obsolete.

It is a further object of the present invention to enable a highly selective and cost-effective extraction of gold from natural, industrial or mining fluids, even from open natural mining fluids, having a volume of greater than 500 m$^3$ and a low concentration of gold.

These objects are solved by the present invention.

In one aspect, the present invention relates to a gold extraction set-up for gold extraction from natural, industrial or mining fluids having a volume of greater than 500 m$^3$ wherein the gold extraction set-up comprises:

  i-a.) a tank comprising a tank chamber, at least one feed line for feeding a natural, industrial or mining fluid, from which fluid gold ions comprised therein are to be extracted, into the tank chamber via an inlet, and at least one discharge line for discharging the fluid out of the tank chamber via an outlet,
  or

  i-b.) a natural or artificial acid mine drainage fluid body having a volume of greater than 500 m$^3$ and from which fluid body gold ions comprised therein are to be extracted, and

  ii.) gold extraction means removably positionable within the tank chamber of the tank or the natural or artificial acid mine drainage fluid body and comprising at least one gold extraction material selected from the group consisting of polyamides and derivatives thereof, and mammal hair.

The inventors made the surprising finding that by means of the gold extractions set-up according to the present invention, gold can be selectively extracted from high volumes of natural, industrial or mining fluids and even from open natural or artificial acid mine drainage fluid body at virtually any concentration level and at very low costs. The unique benefit of this invention is that it can be used in both open waters and in confined areas or tanks. In strong contrast to activated charcoal, which is the most common material to extract gold from leaching fluids (cyanide-rich and, thus, highly toxic), the collector material, i.e. the gold extraction material as used in the present invention, is environmentally friendly and highly specific for gold ions and no other accompanying heavy metal are extracted; this phenomenon has been tested in naturally polluted water (see experimental chapter below). The gold extraction set-up according to the present invention can be implemented and operates in any type of gold-bearing water and at all levels of dissolved gold concentration, it is independent of cyanide leaching. Moreover, the gold extraction means have a much higher loading capacity than other materials, because it does not only charge its surface with gold but, as per the inventors' findings (see experimental chapter below) allows gold to diffuse into its structure. The present invention improves the collector-gold ratio considerably, when compared with activated charcoal: as per the inventors' findings, the ratio between the amount of activated charcoal to the amount of gold to be captured by adsorption is 160:1 (compare Anonymous, 2016a), while the gold extraction material used in the present invention and as defined herein has a ratio of at least 9:1, which improves the extraction by a factor of around 18. This directly translates into much smaller treatment facilities.

Furthermore, the gold extraction set-up can operate over a large range of pH, particularly in very acidic to neutral mining fluids, which are the targeted fluids of the present invention.

As described in more the detail below, the gold extraction set-up can be part of a larger heavy metal extraction plant, in which in addition to gold also other heavy metals can be extracted selectively (e.g. copper, silver, cobalt) within the course of an environmental remediation. Revenues from these extracted commodities will compensate the costs for remediation which is often not done because it is too cost-intensive in the conventional way - the leftovers are dumped for this reason. Therefore, the present invention allows for generating an extra profit, thus giving an incentive to companies to leave a clean environment once mining operations have ceased.

The present invention is of interest to governmental entities, environmental companies and mining companies, who will favour this novel, effective and environmentally friendly technology as a profitable alternative to the commonly used methods currently used for cleaning-up heavily polluted mining sites. The possibility to economically regenerate pure gold (and other value metals) from low to high concentrated polluted natural and industrial mining sites by using the present invention will also render a mining or environmental company more competitive.

In certain embodiments, the gold extraction set-up of the invention comprises the tank of i-a.) and further comprises pump/valve means in the feed/discharge lines of the tank, and a controller for the programmed controlling of at least the pump/valve means, wherein the controller is adapted to use the pump/valve means to lead the gold-containing fluid through the feed line and via the inlet into the tank chamber, through the gold extractions means and via the outlet into the discharge line.

In other embodiments, the tank comprises a, preferably conical, lateral surface wall laterally defining the tank chamber, wherein the inlet and the outlet are mounted in the lateral surface wall, the outlet is located above the inlet, the gold extraction material is positioned within the tank chamber between the inlet and the outlet, and the controller is adapted to guide the fluid through the tank chamber and the gold extraction material in a circular movement. In other embodiments, the tank of i-a.) comprises a lateral surface wall laterally defining the tank chamber, wherein the inlet and the outlet are mounted in the lateral surface wall, the outlet is located above the inlet, the gold extraction material is positioned within the tank chamber between the inlet and the outlet, wherein the lateral surface wall has a cylindrical shape, the feed line/inlet are arranged tangentially to the lateral surface wall and the discharge line/ outlet are arranged tangentially to the lateral surface wall and in opposite direction to the feed line/inlet, to allow a circular movement of the fluid through the tank chamber and the gold extraction material. These embodiments which allow for a circular movement of the fluid through the tank and the tank chamber facilitate the deposition of the solids contained in the fluid in the, preferably conical, bottom of the tank and increase the retention time of the fluid in the tank by providing a longer pathway.

In other embodiments, requiring only a simple and, thus, economical construction, the gold extraction set-up is configured to leading the fluid through the feed line and via the inlet into the tank chamber and through the gold extractions means to the outlet into the discharge line solely based on gravity.

According to other embodiments, the tank chamber has a conical bottom comprising a closeable sludge removal opening for removing sludge accumulated in the conical bottom.

As commonly known in the art, the tank also contains a tank access opening, which is preferably located on the top of the tank, in order to position the gold extraction means into the tank chamber and remove it after the gold extraction process and to allow access to the tank chamber for maintenance work.

As described herein, the gold extraction means comprise at least one gold extraction material selected from the group consisting of polyamides and derivatives thereof, and mammal hair. In certain embodiments, the gold extraction material comprises at least one of the following: a granulate, a powder, a fibre, a filament, a mesh such as a netting or a cloth, a porous three-dimensional shaped body. In certain embodiments, the gold extraction material is a polyamide selected from the group consisting of nylon 6, nylon 4.6, nylon 6.6, nylon 6.10, nylon 6.12, nylon 11, nylon 12. The term "polyamide derivatives" as used herein relate to a polyamide compound that is synthesized from a parent polyamide compound by replacement of one atom with another atom or group of atoms; representative examples for "polyamide derivatives" are, for instance, α methyl nylon 3, β methyl nylon 3, α, α, dimethyl nylon 3, and β, β, dimethyl nylon 3.

In yet other embodiments, the gold extraction means may comprise a retention support for retaining the gold extraction material within the tank chamber or the natural or artificial acid mine drainage fluid body. This allows for retention of the gold extraction material in a predefined area of the tank volume and facilitates retrieval of the gold-covered gold extraction material after completion of the gold extraction process.

In preferred embodiments of the invention, the gold extraction means comprises at least one floating cartridge unit having a top end and a bottom end, wherein the at least one floating cartridge unit is configured to freely float in the fluid or, with its top end, on the fluid surface, wherein the at least one floating cartridge unit comprises a floating element or a support at its top end, wherein the gold extraction material is affixed to the floating element or to the support to allow immersion of the gold extraction material into the fluid present in the tank chamber or into the fluid of the natural or artificial acid mine drainage fluid body, and wherein the gold extraction material is in the form of a fibre, a filament, a mesh such as a netting or a cloth and/or a porous three-dimensional shaped sponge-type body, preferably a folded mesh/net, more preferably an accordion-like folded mesh/net, or hanging monofilaments affixed to the floating element or the support. Thus, these floating cartridge units are configured to freely float in the fluid present in the tank chamber or in the fluid of the natural or artificial acid mine drainage fluid body, or, with the top end, on the fluid surface. It will be inherently clear to the skilled person to select an appropriate number of floating cartridge units to be placed into the fluid, depending on the dimension/volume of the fluid-filled tank or the natural or artificial acid mine drainage fluid body or the expected concentration of gold to be extracted from the fluid.

In specific embodiments, the floating cartridge unit further comprises a mesh-like sleeve surrounding the gold extraction material, wherein the mesh-like sleeve is made from the same or a different material, preferably from the same material, as the gold extraction material. The mesh-like sleeve will prevent the submersed gold extraction material to tangle with adjacent floating cartridge unit or it serves as a mesh-like catch vessel for retaining loose gold extraction material.

In further specific embodiments the floating cartridge unit further comprises a collector bowl on its bottom end. The collector bowl consists of a finer mesh than the mesh-like sleeve surrounding the gold extraction material and its purpose is to pick up any precipitates or finer particles of loose gold extraction material. These embodiments are particularly useful, when the floating cartridge units are placed into open natural or artificial acid mine drainage fluid bodies, thus, preventing further contamination of the fluid bodies with precipitates.

Therefore, another aspect of the present invention relates to a floating cartridge unit as defined and described herein, wherein the floating cartridge unit is used for gold extraction from natural, industrial or mining fluids, in particular for gold extraction from natural, industrial or mining fluids having a volume of greater than 500 m$^3$. The floating cartridge unit has a top end and a bottom end, and is configured to freely float in said fluid or, with its top end, on the fluid surface, wherein the at least one floating cartridge unit comprises a floating element or a support at its top end, wherein the gold extraction material is affixed to the floating element or to the support to allow immersion of the gold extraction material into the fluid (e.g. a mining fluid present in a tank chamber as described herein or a natural or artificial acid mine drainage fluid body as described herein), and wherein the gold extraction material is in the form of a fibre, a filament, a mesh such as a netting or a cloth and/or a porous three-dimensional shaped sponge-type body, preferably a folded mesh/net, more preferably an accordion-like folded mesh/net, or hanging monofilaments affixed to the floating element or the support. Thus, these floating cartridge units are configured to freely float in the natural, industrial or mining fluids, e.g. a mining fluid present in the tank chamber or in the fluid of the natural or artificial acid mine drainage fluid body, or, with the top end, on the fluid surface. In specific embodiments, the floating cartridge unit further comprises a mesh-like sleeve surrounding the gold extraction material, wherein the mesh-like sleeve is made from the same or a different material, preferably from the same material, as the gold extraction material. The mesh-like sleeve will prevent the submersed gold extraction material to tangle with adjacent floating cartridge unit or it serves as a mesh-like catch vessel for retaining loose gold extraction material. In further specific embodiments the floating cartridge unit further comprises a collector bowl on its bottom end. The collector bowl consists of a finer mesh than the mesh-like sleeve surrounding the gold extraction material and its purpose is to pick up any precipitates or finer particles of loose gold extraction material. These embodiments are particularly useful, when the floating cartridge units are placed into open natural or artificial acid mine drainage fluid bodies, thus, preventing further contamination of the fluid bodies with precipitates

A further aspect of the present invention relates to a metal extraction plant for extracting heavy metals, in particular noble metals, from natural, industrial or mining fluids having a volume of greater than 500 m$^3$, the metal extraction plant comprises at least one gold extraction set-up according to the invention and as described herein or a floating cartridge unit according to the invention and as described herein. Thus, the gold extraction set-up or the floating cartridge unit can be part of or used in a larger heavy metal extraction plant, in which in addition to gold also other heavy metals can be extracted selectively (e.g. copper, silver, cobalt) within the course of an environmental remediation. In certain embodiments, the metal extraction plant may comprise at least two gold extraction set-ups, each gold extraction set-up comprising the tank of i-a.), wherein the tanks may be connected together in series or in parallel, thereby allowing the fluid to flow through the tanks in series or in parallel. In preferred embodiments, the metal extraction plant comprises at least one heavy metal extraction device for extracting at least one heavy metal other than gold from the natural, industrial or mining fluid, wherein the at least one heavy metal extraction device is preferably adapted to extract Cu, Ag, Co, Ni and/or Zn from the fluid. Heavy metal extraction devices for extracting heavy metals such as Cu, Ag, Co, Ni and/or Zn from a fluid are known in the art, e.g. by using extractive metallurgy (i.e. mineral processing, hydrometallurgy, electrometallurgy) and froth flotation cells to produce a concentrate. The extractive metallurgy uses heap leaching or dump leaching processes to release the metals into solution. The pregnant leach solution is then stripped of its metals via solution purification processes and/or electrowinning to form a concentrate. The barred fluid is recycled back on to the heaps. The froth flotation process consists mainly of the mineral processing into a pulp, reagent conditioning to hydrophobic surface charges, collection and upward transport by bubbles, formation of stable froth, separation of the froth from the bath to form the concentrate. These customized processes are developed in the laboratory and up scaled accordingly in the metal extraction devices used and adapted for each extraction site. In knowledge of the present invention, the skilled person is able to choose and implement the appropriate set-ups and heavy metal extraction devices depending on the fluid present in the respective extraction site.

It is important to extract the gold at the beginning, i.e. to let the mining fluid travel first through the gold extraction set-up and only afterwards through the heavy metal extraction device(s), because the gold extraction material for extracting gold is only sensitive to gold, while the other heavy metal extraction plants (e.g. for extracting Cu, Ag, Co, Ni, Zn) would also extract gold as impurity.

In another aspect the present invention relates to a method for extracting and recovering gold from a natural, industrial or mining fluid having a volume of greater than 500 m$^3$, the method comprising the consecutive steps of:

a) providing a gold extraction set-up according to the invention and described herein or a metal extraction plant according to the invention and described herein,

b) feeding a natural, industrial or mining fluid, from which fluid gold ions comprised therein are to be extracted, into the tank chamber and positioning the gold extraction means within the fluid present in the tank chamber, wherein the gold extraction means preferably is a floating cartridge unit according to the invention and as described herein, or
positioning the gold extraction means within the fluid of the natural or artificial acid mine drainage fluid body, wherein the gold extraction means preferably is a floating cartridge unit according to the invention and as described herein,

c) extracting gold ions present in the fluid from the fluid by means of the gold extraction material, by letting the fluid travel through the gold extraction means for a dwell period lasting at least 1h, preferably from 1 - 11 hours,

d) optionally transferring the extracted fluid into further heavy metal extraction devices of the metal extraction plant, if present, and

e) harvesting the gold extraction material comprising the extracted gold ions from the tank chamber or from the natural or artificial acid mine drainage fluid body.

With regard to step c.) it will be inherently clear to those skilled in the art that the dwell period may be adapted accordingly, depending on the concentration of the gold in the fluid, the volume of the fluid, and the absorption/ extraction capacity of the gold extraction material. Preferably, the dwell period is chosen until a maximum absorption/extraction capacity of the gold extraction material is reached, that is, the surface of the gold extraction material is basically fully coated with gold, thus, requiring a replacement with fresh gold extraction material for further operation. As mentioned above and demonstrated in the accompanying experimental data, the gold extraction with the aid of the metal extraction materials used in the present invention is a highly selective process. Thus, it is advantageous that the extraction of gold ions of step c.) is based on selective extraction of the gold ions by the gold extraction material.

In the method according to the invention as described herein step e.) may be followed by gold recovery step f.) comprising burning the gold extraction material in a furnace at a temperature below the melting point of gold, thereby also reducing the gold ions to elemental gold, and melting and casting the obtained elemental gold at a temperature at or above the melting point of gold.

A further aspect of the present invention relates to the use of a gold extraction set-up according to the invention and as described herein, of a floating cartridge unit according to the invention and described herein, or of a metal extraction plant according to the invention and described herein, for extracting gold from natural, industrial or mining fluids, in particular from natural, industrial or mining fluids having a volume of greater than 500 m$^3$. In the following, in order to further demonstrate the present invention, illustrative and nonrestrictive examples, figures and embodiments, in particular with reference to the use of the invention for selectively extracting gold from natural, industrial or mining fluids having a volume of greater than 500 m$^3$ and the benefits associated therewith are discussed.

BRIEF DESCRIPTION OF THE FIGURES

Fig. 1a    shows a gold extraction set-up comprising a tank and Fig. 1b shows a horizontal cross-section thereof.

Fig. 2    shows an illustrative flow-chart of an extraction process by using the gold extraction set-up of Fig. 1 and further heavy metal extraction devices.

Fig. 3    shows a first embodiment of a gold extraction set-up comprising a tank and floating cartridge units.

Fig. 4    shows a horizontal section along A-A of the tank of Fig. 3.

Fig. 5    shows a front view of a first embodiment of a floating cartridge unit.

Fig. 6    shows a side view of the floating cartridge unit of Fig. 5.

Fig. 7    shows a section through the floating cartridge unit of Fig. 5 along A-A.

Fig. 8    shows a second embodiment of a gold extraction set-up comprising a tank and floating cartridge units.

Fig. 9    shows a horizontal section along B-B of the tank of Fig. 8.

Fig. 10    shows a front view of the floating cartridge unit of Fig. 8.

Fig. 11    shows a side view of the floating cartridge unit of Fig. 8.

Fig. 12    shows a section through the floating cartridge unit of Fig. 10 along C-C.

Fig. 13    shows a section through the floating cartridge unit of Fig. 10 along D-D.

Fig. 14    shows a detail of the accordion-shaped mesh of the gold extraction material of the floating cartridge unit of Fig. 8.

Fig. 15    shows a side view of an arrangement of gold extraction set-ups comprising a tank, wherein the tanks are connected together in series.

Fig. 16    shows a top view of the arrangement of Fig. 15.

Fig. 17    shows a side view of an arrangement of gold extraction set-ups comprising a tank, wherein the tanks are connected together in parallel.

Fig. 18    shows a top view of the arrangement of Fig. 17.

Fig. 19    shows the principle of the present invention, namely a tank filled with gold extraction material used in the present invention (see Example 1).

Fig. 20    shows the principle of how gold is absorbed by the gold extraction material used in the present invention (see Example 1).

Fig. 21    shows a diagram depicting the Au uptake by the gold extraction material (absorber; colour value) based on the cross-section of gold extraction material (absorber particle, in [$\mu$m]); see Example 1.

Fig. 22    shows the different forms or shapes of gold obtained by the method according to the invention (see Example 1).

Fig. 23    shows the short-term capacity of the gold extraction material (see example 2).

Fig. 24    shows the results of the uptake tests against pumping volumes as per example 3.

Fig. 25    shows the uptake with respect to available fluid concentrations as per example 3; all values < 1 (see box) show the effect of a high Au recovery (supercharging effect) from the fluid, while values > 1 are close to it and would have reached the supercharging effect after a short extension of the experiment.

Fig. 26    shows a table summarizing the results of the qualitative analysis regarding the selective uptake of gold as per example 4.

DETAILED DESCRIPTION OF THE EMBODIMENTS

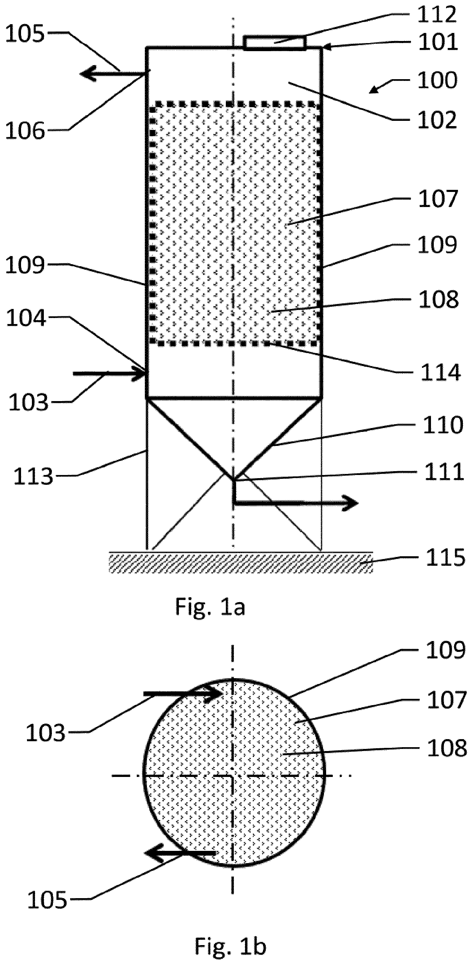

**Fig. 1a** shows a schematic illustration of a gold extraction set-up **100** according to the invention comprising a tank **101** and **Fig. 1b** shows a horizontal cross-section thereof. The tank 101 comprises a tank chamber **102,** at least one feed line **103** for feeding a natural, industrial or mining fluid, from which fluid gold ions comprised therein are to be extracted, into the tank chamber 102 via an inlet **104,** and at least one discharge line **105** for discharging the fluid out of the tank chamber 102 via an outlet **106**. The gold extraction set-up 100 further comprises gold extraction means **107** removably positionable within the tank chamber 102 of the tank 101. The gold extraction means 107 comprise at least one gold extraction material 108 selected from the group consisting of polyamides and derivatives thereof, and mammal hair. The tank 101 further comprises pump/valve means (not shown in the figure) in the feed/ discharge lines 103/105 of the tank 101, and a controller (not shown in the figure) for the programmed controlling of at least the pump/valve means, wherein the controller is adapted to use the pump/valve means to lead the gold-containing fluid through the feed line 103 and via the inlet 104 into the tank chamber 102, through the gold extractions means 107 and via the outlet 106 into the discharge line 105; said pump/valve means and said controllers are well known in the art and the skilled person is well acquainted with these. The tank 101 comprises a lateral surface wall **109** laterally defining the tank chamber 102, wherein the inlet 104 and the outlet 106 are mounted in the lateral surface wall 109, the outlet 106 is located above the inlet 104 and the gold extraction material 108 is positioned within the tank chamber 102 between the inlet 104 and the outlet 106. The lateral surface wall 109 has a cylindrical shape, the feed line/inlet 103/104 are arranged tangentially to the lateral surface wall and the discharge line/ outlet 105/106 are arranged tangentially to the lateral surface wall 109 and in opposite direction to the feed line/inlet 103/104, to allow a circular movement of the fluid through the tank chamber 102 and the gold extraction material 108. This allows for a circular movement of the fluid through the tank and the tank chamber to facilitate the deposition of the solids contained in the fluid in the bottom of the tank 101 and to increase the distance the fluid will travel through the tank 101 and the gold extraction material 108. The tank chamber 102 has a conical bottom **110** comprising a closeable sludge removal opening **111** for removing sludge accumulated in the conical bottom 110. As commonly known in the art, the tank 101 also contains a tank access opening **112,** which is located on the top of the tank 101, in order to position the gold extraction means 107 into the tank chamber 102 and remove it after the gold extraction process and to allow access to the tank chamber 102 for maintenance work. The gold extraction set-up 100 also comprises a support **113** on stable ground, e.g. a concrete base **115,** for supporting and keeping the tank 101 in a stable position.

As said, the gold extraction means 107 comprise at least one gold extraction material 108 selected from the group consisting of polyamides and derivatives thereof, and mammal hair. In certain embodiments, the gold extraction material 108 comprises at least one of the following: a granulate, a powder, a fibre, a filament, a mesh such as a netting or a cloth, a porous three-dimensional shaped body. In certain embodiments, the gold extraction material is a polyamide selected from the group consisting of nylon 6, nylon 4.6, nylon 6.6, nylon 6.10, nylon 6.12, nylon 11, nylon 12. The gold extraction means 107 also comprise a retention support **114** for retaining the gold extraction material 108 within the tank chamber 102. The retention support 114 allows for retention of the gold extraction material 108 in a predefined area of the tank volume/ tank chamber 102 and facilitates retrieval of the gold-covered gold extraction material 108 after completion of the gold extraction process.

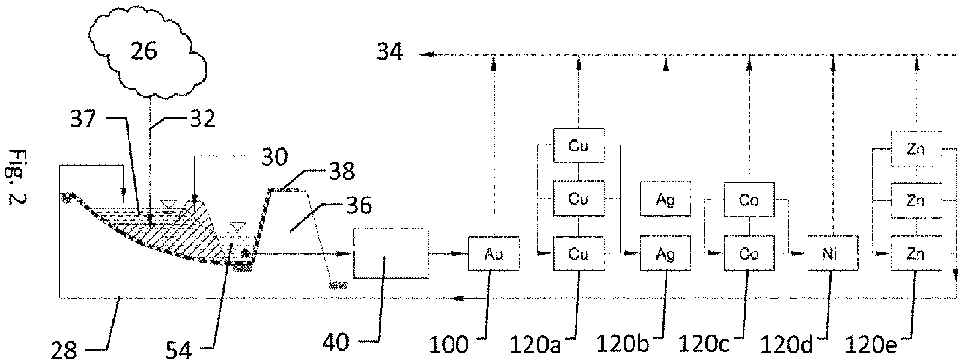

**Fig. 2** shows an illustrative flow-chart of an extraction process by using the gold extraction set-up 100 of Fig. 1a and b and further heavy metal extraction devices **120a - e** (Cu extraction device 120a, Ag extraction device 120b, Co extraction device 120c, Ni extraction device 120d, Zn extraction device 120e). The flow-chart in Fig. 2 illustrates the extraction process from leachate 54 of acid mine fluid pond **37** which comes from existing lined (lining **38**) tailing dams **36** and as remains from the mining activities. The leachate **54** is collected by gravity or pumped (via pump and filter device **40**) through the gold extraction set-up 100 and the heavy metal extraction devices 120a - e, which are placed in sequence, but may be varied and adapted depending on the heavy metals present in the leachate 54 and their concentrations. Thus, depending on the amount/concentration of heavy metals in the leachate 54 the number of gold extraction set-ups 100 and heavy metal extraction devices 120 can be increased or reduced as required. Consequently, it will be clear to those skilled in the art that more or less heavy metal extraction devices may be implemented and/or heavy metal extraction devices for extracting heavy metals other than Cu, Ag, Co, Ni or Zn from the natural, industrial or mining fluid may be foreseen. It is important to extract the gold at the beginning, i.e. to let the mining fluid travel first through the gold extraction set-up 100 and only afterwards through the heavy metal extraction device(s) 120, because the gold extraction material 108 for extracting gold is only sensitive to gold, while the other heavy metal extraction plants (e.g. for extracting Cu, Ag, Co, Ni, Zn) would also extract gold as impurity.

The treated leachate 54, i.e. leachate with reduced amounts of gold and other heavy metals will be returned with the heavy metals that have not been extracted in the first cycle and acid 28 to the mining site and further to the tailing dam 36 to facilitate further leaching of the reactive material dumps **30.** After the major part of, preferably all, heavy metals have been leached out of the reactive material dump 30, the $CO_2$ sequestration process **32** will be started with the remaining material 30 in the acid mine fluid pond. The $CO_2$ sequestration process 32 will increase the pH of the fluid and will be go on until the fluid pH has been neutralized to acceptable levels. An additional value will be created in the form of carbon certificates **26** through the $CO_2$ sequestration process 32. The recovered heavy metals obtained with the gold extraction set-up 100 and the heavy metal extraction devices 120a-e can be sold as value metals **34.**

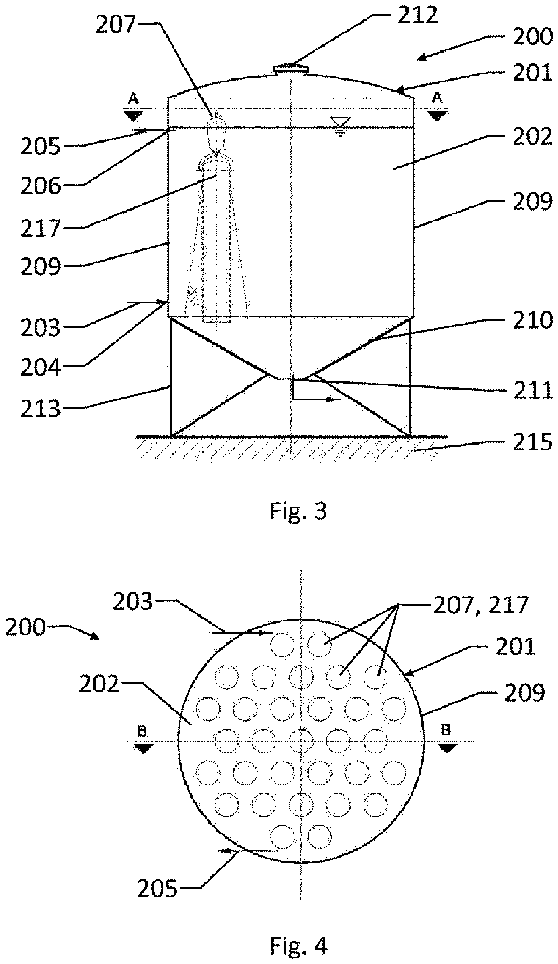

**Fig. 3** shows a first embodiment of a gold extraction set-up **200** comprising a tank **201** and a number of floating cartridge units **217** comprised in the gold extraction means **207. Fig. 4** shows a horizontal section along A-A of the tank 201 of Fig. 3. The basic structure of the gold extraction set-up 200 corresponds to the basic structure of gold extraction set-up 100 (see Fig. 1a, 1b). Thus, the tank 201 comprises a tank chamber **202,** at least one feed line **203** for feeding a natural, industrial or mining fluid, from which fluid gold ions comprised therein are to be extracted, into the tank chamber 202 via an inlet **204,** and at least one discharge line **205** for discharging the fluid out of the tank chamber 202 via an outlet **206.** The gold extraction set-up 200 further comprises gold extraction means in form of a number of floating cartridge units **217** removably positionable within the tank chamber 202 of the tank 201. In Fig. 3 only one floating cartridge unit 217 is shown for sake of simplicity; however, Fig. 4 illustrates the arrangement of a number of units 217 in the tank chamber 202. For example, when using a 5000 gallons tank 201, approximately 25 - 31 of floating cartridge units 217 may be placed in the tank 201. The tank 201 comprises a lateral surface wall **209** laterally defining the tank chamber 202, wherein the inlet 204 and the outlet 206 are mounted in the lateral surface wall 209, the outlet 206 is located above the inlet 204 and the gold extraction means 207 are positioned within the tank chamber 202 between the inlet 204 and the outlet 206. The lateral surface wall 209 has a cylindrical shape, the feed line/inlet 203/204 are arranged tangentially to the lateral surface wall and the discharge line/ outlet 205/206 are arranged tangentially to the lateral surface wall 209 and in opposite direction to the feed line/inlet 203/204, to allow a circular movement of the fluid through the tank chamber 202 and the gold extraction means 207. This allows for a circular movement of the fluid through the tank and the tank chamber to facilitate the deposition of the solids contained in the fluid in the bottom of the tank 201 and to increase the distance the fluid will travel through the tank 201. The tank chamber 202 has a conical bottom **210** comprising a closeable sludge removal opening **211** for removing sludge accumulated in the conical bottom 210. As commonly known in the art, the tank 201 also contains a tank access opening **212,** which is located on the top of the tank 201, in order to position the gold extraction means 207 into the tank chamber 202 and remove it after the gold extraction process and to allow access to the tank chamber 202 for maintenance work. The gold extraction set-up 200 also comprises a support **213** on stable ground, e.g. a concrete base **215,** for supporting and keeping the tank 201 in a stable position. The tank 201 further comprises pump/valve means (not shown in the figure) in the feed/discharge lines 203/205 of the tank 201, and a controller (not shown in the figure) for the programmed controlling of at least the pump/valve means, wherein the controller is adapted to use the pump/valve means to lead the gold-containing fluid through the feed line 203 and via the inlet 204 into the tank chamber 202, through the gold extractions means 207 and via the outlet 206 into the discharge line 205; said pump/valve means and said controllers are well known in the art and the skilled person is well acquainted with these.

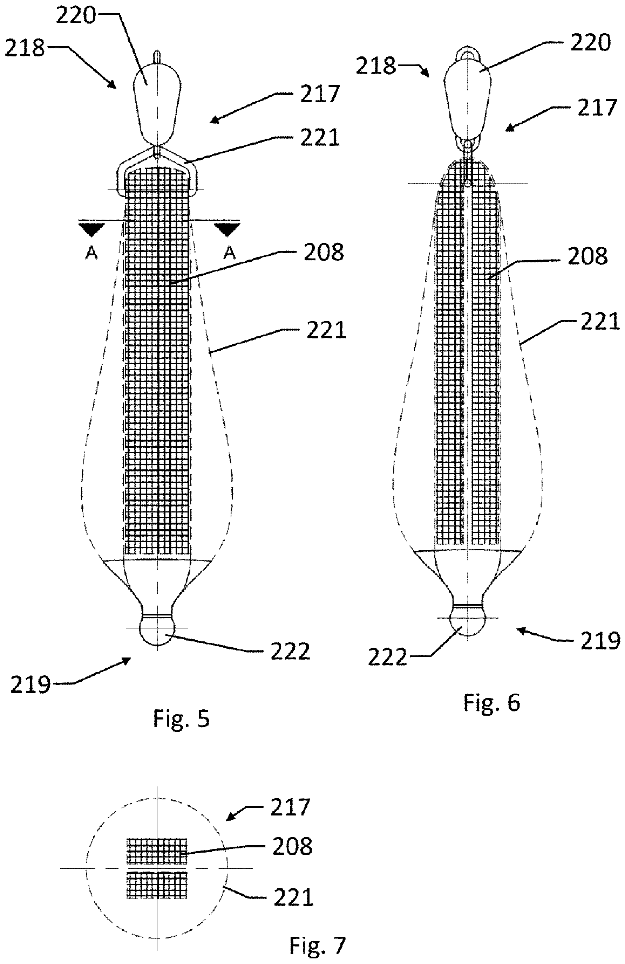

As already mentioned above, the gold extraction means 207 comprises a number of floating cartridge units 217, wherein an embodiment of such a floating cartridge unit 217 is described in detail in Figs. 5 - 7. **Fig. 5** shows a front view of a first embodiment of a floating cartridge unit 217. **Fig. 6** shows a side view of the floating cartridge unit 217 of Fig. 5. **Fig. 7** shows a section through the floating cartridge unit 217 of Fig. 5 along A-A. The floating cartridge unit 217 has a top end **218** and a bottom end **219.** The floating cartridge unit 217 is configured to freely float with its top end 218 on the fluid surface. In order to allow floating, the floating cartridge unit 217 comprises a floating element **220** (e.g. an air-filled balloon or a buoy; for example, a buoy with 8kg buoyancy) at its top end 218. Furthermore, the gold extraction unit 217 comprises a gold extraction material **208** which is affixed to the floating element 220 via a holding ring **221** to allow immersion of the gold extraction material 208 into the fluid present in the tank chamber 202 (or if the floating cartridge unit 217 is used for extracting gold from a natural or artificial acid mine drainage fluid body, unit 217 is immersed into the fluid of the natural or artificial acid mine drainage fluid body). In this embodiment the gold extraction material 208 is in the form of an accordion-like folded cloth or net. However, it will be clear to those skilled in the art that the gold extraction material may also be in the form of a fibre, a filament, or a porous three-dimensional shaped sponge-type body being affixed to the floating element 220. For example, about 50 kg of gold extraction material 208 may be affixed to the floating element 220. It is noted that none of the parts of the floating cartridge unit 217 shall be made of carbon steel because of the acidic environment of the mining fluid (approx. pH 1.5 - 3.25) in which the units 217 are finally placed for gold extraction.

Similar to the above-mentioned gold extraction material 108, also the gold extraction material 208 is selected from the group consisting of polyamides and derivatives thereof, and mammal hair. In certain embodiments, the gold extraction material 208 may be a polyamide selected from the group consisting of nylon 6, nylon 4.6, nylon 6.6, nylon 6.10, nylon 6.12, nylon 11, nylon 12.

The floating cartridge unit 217 further comprises a mesh-like sleeve **221** surrounding the gold extraction material 208, wherein the mesh-like sleeve 221 is made from the same or a different material, preferably from the same material, as the gold extraction material 208. The mesh-like sleeve 221 will prevent the submersed gold extraction material 208 to tangle with adjacent floating cartridge units 217 or it serves as a mesh-like catch vessel for retaining loose gold extraction material 208.

Furthermore, the floating cartridge unit 217 optionally comprises a collector bowl **222** on its bottom end 219. The collector bowl 222 consists of a finer mesh than the mesh-like sleeve 221 surrounding the gold extraction material 208 and its purpose is to pick up any precipitates or finer particles of loose gold extraction material 208. Collector bowls 222 are particularly useful, when the floating cartridge units 217 are placed into open natural or artificial acid mine drainage fluid bodies (e.g. into acid mine fluid pond 37 or leachate 54 of Fig. 2), thus, preventing further contamination of the fluid bodies with precipitates. The collector bowl 222 may be omitted when the floating cartridge unit 217 is placed in a tank; in this case, the precipitates or finer particles of loose gold extraction material 208 will be collected in the tank's conical bottom 210 and removed via the sludge removal opening 211.

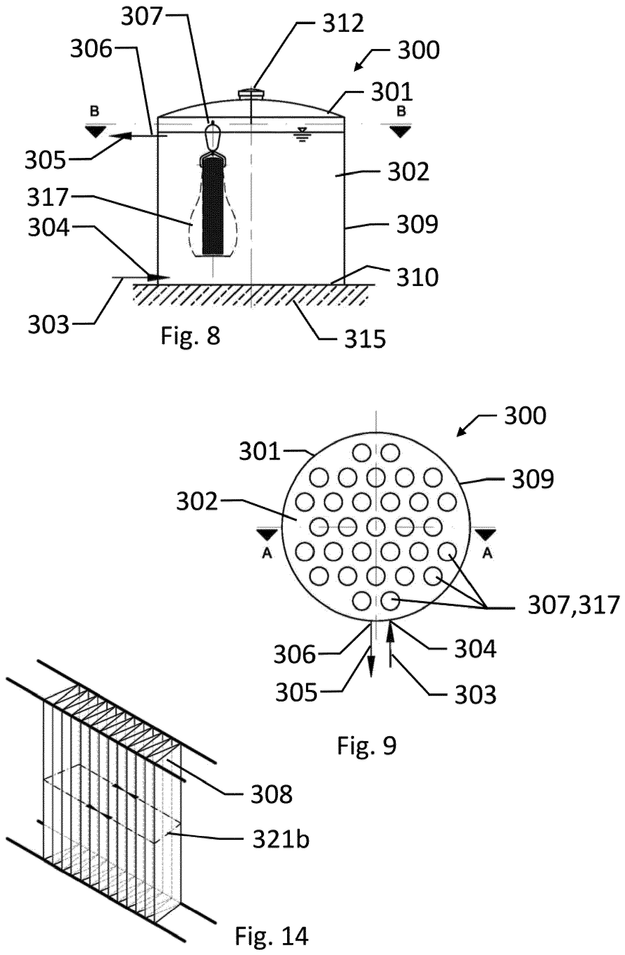

**Fig. 8** shows a second embodiment of a gold extraction set-up **300** comprising a tank **301** and a number of floating cartridge units **317** comprised in the gold extraction means **307. Fig. 9** shows a horizontal section along A-A of the tank 301 of Fig. 8.

The basic structure of the gold extraction set-up 300 corresponds to the basic structure of gold extraction set-up 200 (see Fig. 3) and gold extraction set-up 100 (see Fig. 1a, 1b). Thus, the tank 301 comprises a tank chamber **302,** at least one feed line **303** for feeding a natural, industrial or mining fluid, from which fluid gold ions comprised therein are to be extracted, into the tank chamber 302 via an inlet **304,** and at least one discharge line **305** for discharging the fluid out of the tank chamber 302 via an outlet **306.** The gold extraction set-up 300 further comprises gold extraction means in form of a number of floating cartridge units **317** removably positionable within the tank chamber 302 of the tank 301. In Fig. 8 only one floating cartridge unit 317 is shown for sake of simplicity; however, Fig. 9 illustrates the arrangement of a number of units 317 in the tank chamber 302. For example, when using a 5000 gallons tank 301, approximately 25 - 31 of floating cartridge units 317 may be placed in the tank 301. The tank 301 comprises a lateral surface wall **309** laterally defining the tank chamber 302, wherein the inlet 304 and the outlet 306 are mounted in the lateral surface wall 309, the outlet 306 is located above the inlet 304 and the gold extraction means 307 are positioned within the tank chamber 302 between the inlet 304 and the outlet 306. The lateral surface wall 309 has a cylindrical shape. The tank chamber 302 has a flat horizontal bottom **310.** As commonly known in the art, the tank 301 also contains a tank access opening **312,** which is located on the top of the tank 301, in order to position the gold extraction means 307 into the tank chamber 302 and remove it after the gold extraction process and to allow access to the tank chamber 302 for maintenance work. The gold extraction set-up 300 is resting on and supported by a concrete base **315,** for supporting and keeping the tank 301 in a stable position. The tank 301 further comprises pump/valve means (not shown in the figure) in the feed/ discharge lines 303/305 of the tank 301, and a controller (not shown in the figure) for the programmed controlling of at least the pump/valve means, wherein the controller is adapted to use the pump/valve means to lead the gold-containing fluid through the feed line 303 and via the inlet 304 into the tank chamber 302, through the gold extractions means 307 and via the outlet 306 into the discharge line 305; said pump/valve means and said controllers are well known in the art and the skilled person is well acquainted with these.

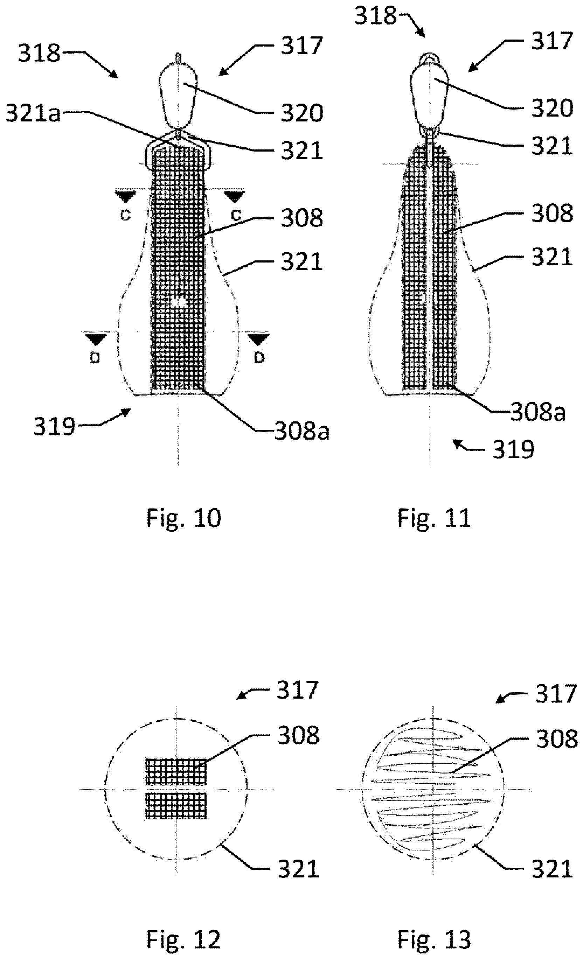

As already mentioned above, the gold extraction means 307 comprises a number of floating cartridge units 317, wherein an embodiment of such a floating cartridge unit 317 is described in detail in Figs. 10 - 14. **Fig. 10** shows a front view of the floating cartridge unit 317 of Fig. 8. **Fig. 11** shows a side view of the floating cartridge unit 317 of Fig. 8. **Fig. 12** shows a section through the floating cartridge unit 317 of Fig. 10 along C-C. **Fig. 13** shows a section through the floating cartridge unit 317 of Fig. 10 along D-D. **Fig. 14** shows a detail of the accordion-shaped mesh of the gold extraction material 308 of the floating cartridge unit 317 of Fig. 8.

The floating cartridge unit 317 has a top end **318** and a bottom end **319.** The floating cartridge unit 317 is configured to freely float with its top end 318 on the fluid surface. In order to allow floating, the floating cartridge unit 317 comprises a floating element **320** (e.g. an air-filled balloon or a buoy; for example, a buoy with 8kg buoyancy) at its top end 318. Furthermore, the gold extraction unit 317 comprises a gold extraction material **308** which is affixed to the floating element 320 via a holding ring **321** to allow immersion of the gold extraction material 308 into the fluid present in the tank chamber 302 (or if the floating cartridge unit 317 is used for extracting gold from a natural or artificial acid mine drainage fluid body, unit 317 is immersed into the fluid of the natural or artificial acid mine drainage fluid body).

In the embodiment shown in Figs. 10 - 14 the gold extraction material 308 is in the form of an accordion-like folded cloth or net (see in particular Fig. 14 showing the accordion-like folding). Before affixing the gold extraction material 308 to floating element 320 via the holding ring 321, the gold extraction material 308 is folded accordion-like, thus forming a block-shaped cloth element. This folded block-shaped gold extraction material 308 is then filed through the opening **321a** of the holding ring 321. The midpoint **321b** of the folded material 308, which midpoint 321b is aligned with the holding ring 321 is shown in Fig. 14. It is noted that none of the parts of the floating cartridge unit 317 shall be made of carbon steel because of the acidic environment of the mining fluid (approx. pH 1.5 - 3.25) in which the units 317 are finally placed for gold extraction. For example, about 50 kg of gold extraction material 308 may be affixed to the floating element 320.

Similar to the above-mentioned gold extraction material 108 and 208, also the gold extraction material 308 is selected from the group consisting of polyamides and derivatives thereof, and mammal hair. In certain embodiments, the gold extraction material 308 may be a polyamide selected from the group consisting of nylon 6, nylon 4.6, nylon 6.6, nylon 6.10, nylon 6.12, nylon 11, nylon 12.

The floating cartridge unit 317 further comprises a mesh-like sleeve **321** surrounding the gold extraction material 308, wherein the mesh-like sleeve 321 is made from the same or a different material, preferably from the same material, as the gold extraction material 308. The mesh-like sleeve 321 will prevent the submersed gold extraction material 308 to tangle with adjacent floating cartridge units 317 or it serves as a mesh-like catch vessel for retaining loose gold extraction material 308. During operation and gold extraction, the accordion-shaped gold extraction material 308 will unfold at its loose end 308a at the bottom 319 and, thus, will expand while floating in the mining fluid. This is illustrated by **Fig. 12** showing a section through the floating cartridge unit 317 of Fig. 10 along C-C at a position closer to the holding ring 321 and midpoint 321b, while **Fig. 13** shows a section through the floating cartridge unit 317 of Fig. 10 along D-D at a position closer to the loose end 308a of the gold extraction material 308.

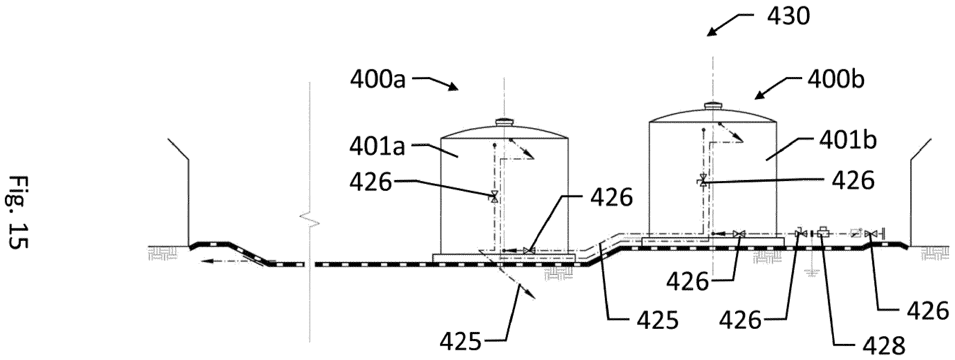

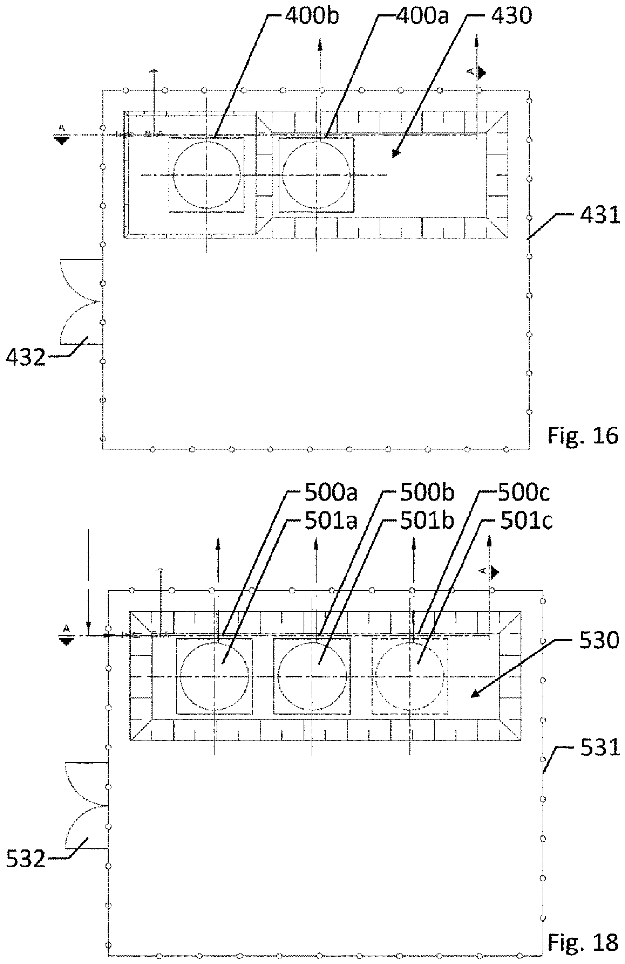

**Fig. 15** shows a side view of a metal extraction plant **430** comprising an arrangement of two gold extraction set-ups **400a, 400b. Fig. 16** shows a top view of the metal extraction plant 430 of Fig. 15; the metal extraction plant 430 may be surrounded by a fence **431** with a closable access door **432** for safety reasons. Each gold extraction set-up 400a, 400b comprises a respective tank **401a, 401b,** wherein the tanks 401a, 401b are connected together in series by gravity flow. The fluid connection of tanks 401a, 401b in series by gravity is realized by means of fluid lines comprising valves and pumps according to the commonly known principles and common knowledge to those skilled in the art; an exemplary arrangement of the fluid lines **425** (by dashed and arrowed lines), valves **426,** and a flowmeter **428** is indicated in Fig. 15 and Fig. 16. Incoming mining fluid to be treated is pumped into the tank 401b by a (not shown) pump system, preferably at a rate of from about 15 m³/h to about 20 m³/h, considering 5000 gallon tanks. The mining fluid passes through tank 401b and further via gravity to tank 401a. For example, the gravity fluid line between tanks 401b, 401a is preferably designed for a rate of 20 m³/h by staggering the tanks 401b, 401a in level by a minimum of 40 cm and connecting them with a 3" pipe having a maximum length of about 13 m.

The gold extraction set-ups 400a, 400b may be constructed as a gold extraction set-up 100, 200 or 300 as described above.

It will be clear to those skilled in the art that, in addition to the gold extraction set-ups 400a, 400b, the metal extraction plant 430 may further comprises at least one heavy metal extraction device for extracting at least one heavy metal other than gold from the natural, industrial or mining fluid that is to be treated. As described in this disclosure, the at least one heavy metal extraction device may be adapted to extract Cu, Ag, Co, Ni and/or Zn from the fluid (see also Fig. 2 and description thereof).

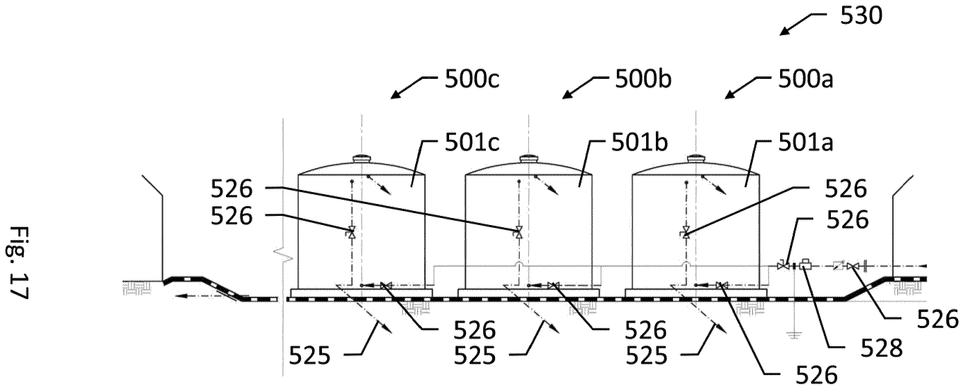

**Fig. 17** shows a side view of a metal extraction plant **530** comprising an arrangement of three gold extraction set-ups **500a, 500b, 500c. Fig. 18** shows a top view of the metal extraction plant 530 of Fig. 17; the metal extraction plant 530 may be surrounded by a fence **531** with a closable access door **532** for safety reasons.

Each gold extraction set-up 500a, 500b, 500c comprises a respective tank **501a, 501b, 501c** wherein the tanks 501a, 501b, 501c are connected together in parallel, wherein the gold extraction set-up 500c with tank 501c may be optionally connected or disconnected from the metal extraction plant (indicated in Fig. 17 by the dotted line indicating tank 501c). The fluid connection of tanks 501a, 501b, 501c in parallel is realized by means of fluid lines comprising valves and pumps according to the commonly known principles and common knowledge to those skilled in the art; an exemplary arrangement of the fluid lines **525** (by dashed, dotted or arrowed lines), valves **526,** and a flowmeter **528** is indicated in Fig. 17 and Fig. 18. Incoming mining fluid to be treated is pumped into tanks 501a, 501b and optionally 501c by a (not shown) pump system, preferably at a rate of from about 15 m³/h to about 20 m³/h, considering 5000 gallon tanks.

The gold extraction set-ups 500a, 500b, 500c may be constructed as a gold extraction set-up 100, 200 or 300 as described above.

It will be clear to those skilled in the art that, in addition to the gold extraction set-ups 500a, 500b, 500c, the metal extraction plant 530 may further comprises at least one heavy metal extraction device for extracting at least one heavy metal other than gold from the natural, industrial or mining fluid that is to be treated. As described in this disclosure, the at least one heavy metal extraction device may be adapted to extract Cu, Ag, Co, Ni and/or Zn from the fluid (see also Fig. 2 and description thereof).

EXAMPLES and EXPERIMENTAL DATA

The present invention is further described and evidenced by the following examples.

**Example 1: Principle of the gold extraction method according to the present invention**

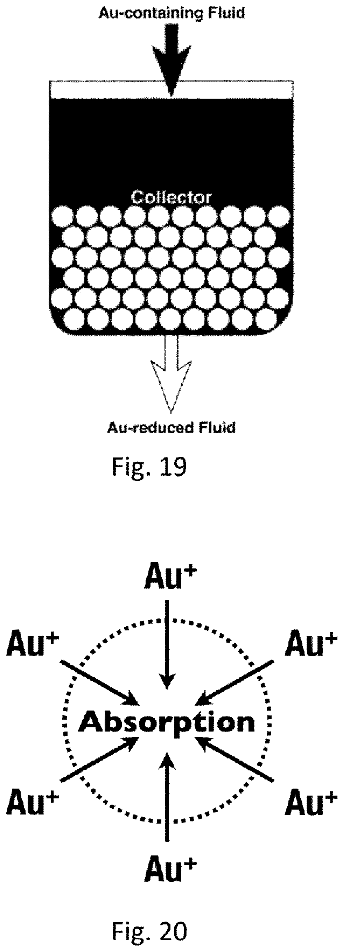

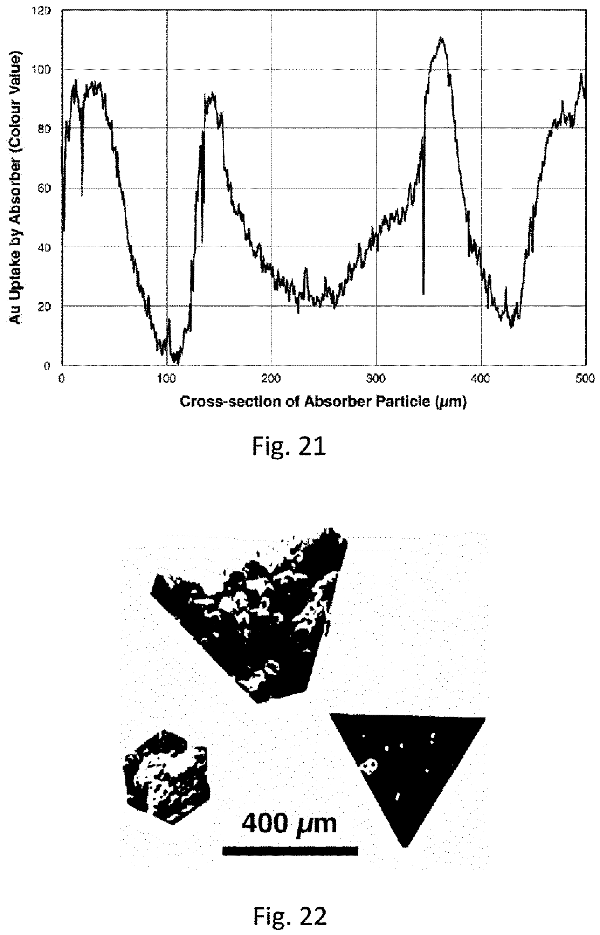

The basic principle of the gold extraction method according to the present invention is illustrated in **Fig. 19,** which shows a simplified tank system filled with gold extraction material ("collector"). The tank system filled with the gold extraction material may be constructed as a gold extraction set-up comprising a tank according to the invention and as described herein. The gold extraction material is selected from the group consisting of polyamides and derivatives thereof, and mammal hair. Preferably, the gold extraction material is a polyamide selected from the group consisting of nylon 6, nylon 4.6, nylon 6.6, nylon 6.10, nylon 6.12, nylon 11, nylon 12. Even though in Fig. 19, the gold extraction material is depicted as a granulate/particles, it will be clear to those skilled in the art that it may have other shapes, e.g. a powder, a fibre, a filament, a mesh such as a netting or a cloth, or a porous three-dimensional shaped body. A gold-containing natural, industrial or mining fluid ("Au-containing fluid") is introduced into the tank and travels through the gold extraction material, wherein the gold contained in the fluid is extracted therefrom by the gold extraction material. The gold-concentration in the effluent fluid is substantially reduced ("Au-reduced fluid"). At this stage, gold remains in the ionic state, which is then followed by a gold recovery step in which the gold ions are reduced to elemental gold (see Fig. 22 below).

**Fig. 20** schematically illustrates the process how gold ions (Au+) re absorbed by the gold extraction material used in the present invention. Without being bound to a specific scientific theory, the inventors assume, based on microscopic images of cross sections of Au-filled gold extraction material, that the surface area including the pores of the gold extraction material are covered/filled up with the gold ions which diffuse into the gold extraction material while immersed in the Au-containing fluid.

This theory mentioned above is further supported by the diagram given in **Fig. 21,** showing a diagram depicting the Au uptake by the gold extraction material (absorber; colour value) based on the cross-section of gold extraction material (absorber particle, in [$\mu$m]).

In the method according to the invention as described herein a gold recovery step is applied which comprises burning the gold-covered gold extraction material in a furnace at a temperature below the melting point of gold, thereby also reducing the gold ions to elemental gold, and melting and casting the obtained elemental gold at a temperature at or above the melting point of gold. Specifically, after removing the gold extraction means with the fully gold-charged gold extraction material (e.g. a floating device unit as described herein) from the mining fluid present in a tank or from the acid mine drainage fluid body, the gold extraction material is washed with water in order to remove residual metal contaminated mining fluid. The gold extraction material is then dried (e.g. under the sun in order to save energy) before filling it into the furnace, where it will be burned at a temperature below the melting point of gold until all the gold extraction material (e.g. polyamide or mammal hair) is converted to carbon dioxide, among others. During the burning step, the gold ions are reduced to elemental gold. Finally, the temperature of the furnace is increased to at least 1064°C (melting point of gold) and the elemental gold is melted and casted into e.g. bars. **Fig. 22** shows different forms and shapes of gold obtained by the method according to the invention.

**Example 2: Short term capacity test of gold extraction material**

The gold extraction capacity of a gold extraction material (nylon 6, tightly woven mesh/fabric with 0.02 mm fiber Ø/thickness) was tested in a short experiment over a period of 180 min. In this experiment, the polyamide material was put into a vessel containing a gold containing fluid (5 kg polyamide material/m$^3$ fluid) with an initial gold ion concentration of 10 ppm. The fluid was slightly agitated and the amount of removed gold [ppm, loss recalculated into %] was measured at predefined periods of time (0, 20, 40, 60, 120, and 180 min) by Inductively Coupled Plasma Spectrometry (Optima 8000 ICP-OES, double-spectrometer optical system).

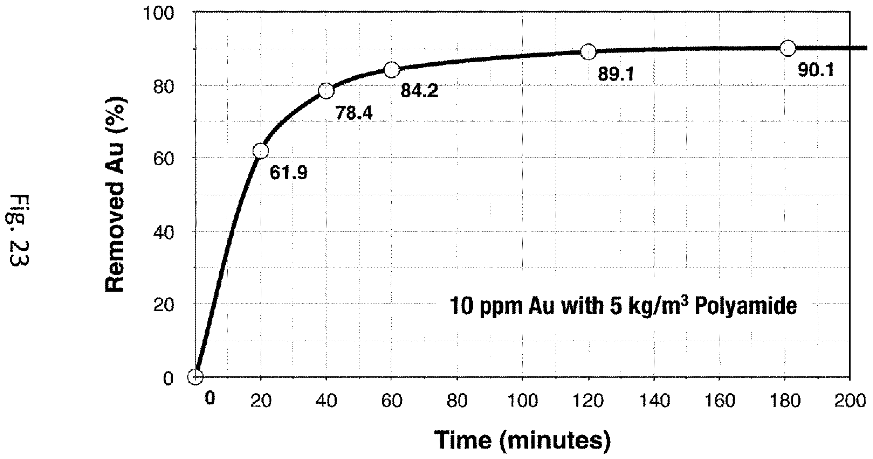

As can be seen in in the diagram of **Fig. 23,** more than 80% of the gold has been removed from the fluid after 1 h of incubation (60 min).

**Example 3: Capacity tests (loading tests) of gold extraction material**

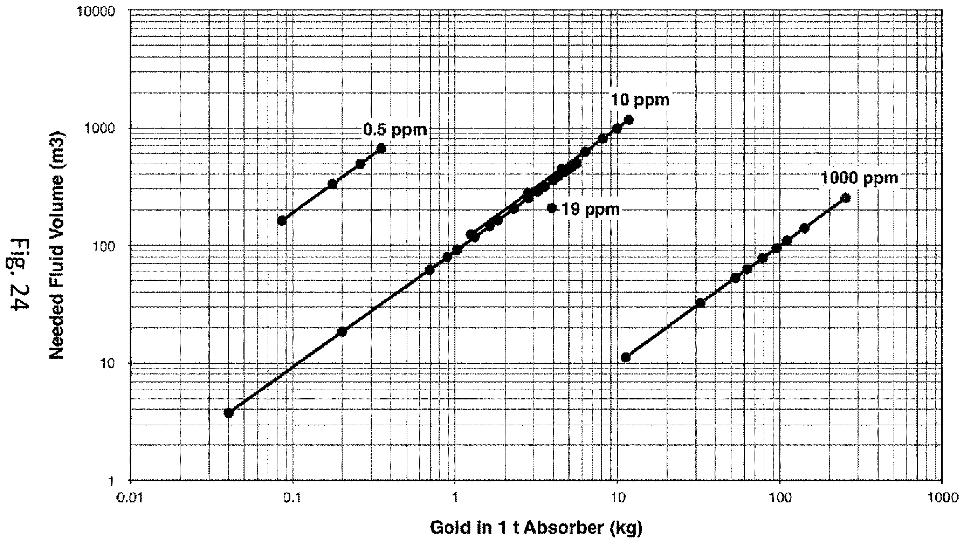

This example relates to experimental tests demonstrating the loading capacity of gold extraction material (nylon 6 filaments with varying thickness: Ø 0.2, 0.8, and 1.0 mm) as used in the present invention. In these tests a fluid gold standard with 1000 ppm Au and an acid mining drainage (AMD) containing ~ 19 ppm Au for comparison were used. As described above, the test fluids were slightly agitated and the amount of removed gold [ppm, loss recalculated into %] was measured 4 hours of extraction time by Inductively Coupled Plasma Spectrometry (Optima 8000 ICP-OES) (results are depicted in **Fig. 24**).

The experiment yielded the following results:
Within the first hour, the uptake of gold from the standard reached a peak of approximately 30g Au per kilogram of collector material, probably due to a first charging of surface-near layers. Then, the uptake slowed down for another 4 hours and successively picked up intake speed until the experiment was terminated at 11 hours; the uptake reached 113 g Au per kilogram of the gold extraction material (this is in contrast to the short term test of Example 2 and Fig. 23 described above, in which a much finer fabric that accelerated the uptake, leading to an extraction of 80% within one hour, was used).

Experiments using the mining fluid as a control (Ag, Cu, Co, Zn, Ni, and Cr were also contained in the mining fluid with extreme concentrations), although carrying much less gold in solution (< 0.7 ppm) than in the previous experiment, also lead to an efficient and selective gold removal by the gold extraction material (not shown here, because the fluids had Au concentrations below the limit of detection). During this experiment, none of the mentioned other metals were extracted, illustrating the quality and selectivity of the separation process, which is essential for high purity gold production.

From the inventors' observations (without being bound to a specific theory), the absorption of gold by the gold extraction material may be described as following the *Nernst Distribution Coefficient* (Law describing the distribution of an element/compound between two immiscible fluids, in which the element/compound is soluble):

$$K = \frac{C_A}{C_B} \quad (C = \text{concentrations of A,B: A for gold extraction material, B for fluid})$$

In the case described, this means that the gold extraction material takes up ~ 90% of what is contained in the surrounding fluid (e.g., acid mining drainage, AMD) according to the absorption isotherms from the respective experiments. This also indicates a low uptake from low-concentration fluids (e.g., many AMDs) and a high uptake from artificial fluids (e.g., industrial leaching fluids) as seen in Fig. 24. However, Fig. 24 reveals that ultimately for a specific gold concentration in the test fluid (e.g., 10 ppm), there is practically no difference between the removal rates of gold with different fiber thicknesses (various test series overlap in the plot) other than a time constraint (see following paragraph).

A faster uptake is observed in fine fiber materials (larger reactive surface), while coarse fibers initially appear to be resisting the uptake but then pick up at later stages. An example for the latter is seen in line B1 of Fig. 24 (test over 4 hours; Ø 2 mm): At ambient temperatures in the lab (~ 22 °C) there was no uptake at all. However, with the same coarse fiber, Au extraction from the fluid was also observed at an increased temperature (42 °C); elevated temperatures were shown to increase the diffusion kinetics. Thus, higher solution temperatures increase the uptake of Au from the Au containing fluid by the gold extraction materials (suggesting even the overall enrichment).

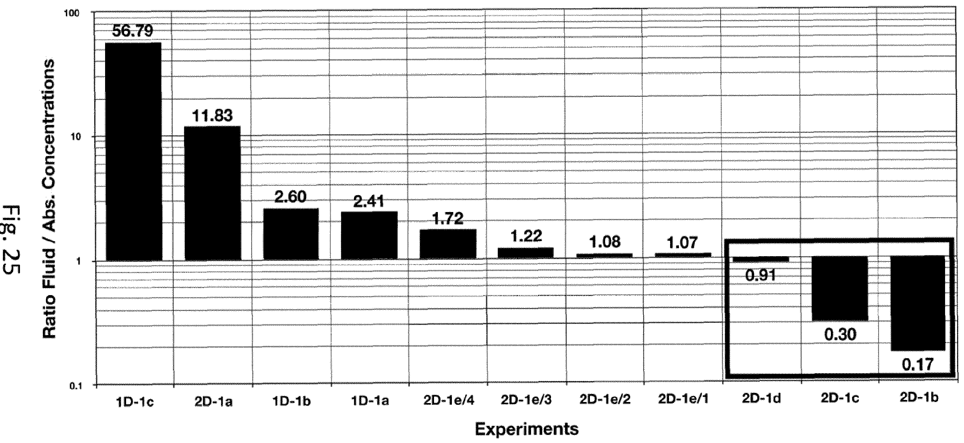

Tests indicate that fibers of a certain diameter produced diffusion fronts of Mod-1. Such fronts, if they were real, could overrule the *Nernst Distribution Coefficient* and continue enriching Mod-1 in the fabric. Several of our tests demonstrate that this is indeed the case: **Fig. 25** shows the uptake with respect to available fluid concentrations; all values < 1 (see box) show the effect of a high Au recovery (supercharging effect) from the fluid, while values > 1 are close to it and would have reached the supercharging effect after a short extension of the experiment. Thus, it can be expected that during longer water exchange periods in an industrial setting in which the AMD concentrations remain largely the same, a supercharging of the gold extraction material with Au will happen (one of the tests shown in in Fig. 24 already concentrated ~ 5 times of the liquid concentration; see also uppermost portion of lines in the 10 ppm extension in Fig. 24, which extends far above the associated patterns).

### Example 4: Ion-specific uptake test

This example relates to an ion-specific uptake test, demonstrating an Au specific uptake by the gold extraction material.

A number of standard solutions (Au, Ag, Cu, Co, Ni, Zn, Mn, Cr, V, As, Pb, Hg) were qualitatively tested for the specificity of the gold extraction material to be used for remediation. In this experiment polyamide filaments (nylon 6, 1.0 mm) were used as gold extraction material. With the exception of As, all other standard solutions contained 1000 ppm of the respective metal; due to the solubility of the used As compound ($As_2O_3$) and the lack of an industrial standard, the As concentration was slightly lower.

The test was conducted as per the following:
First, the filaments were immersed into the standard solutions and were left for 24 hours. Then, the filaments were extracted, rinsed with distilled water, and dropped on tissue to remove all fluid.

Afterwards, the filaments were placed in a few ml of different reactants (see above, e.g., reducers, oxidisers, pH regulators: acidity/alkalinity; occasionally, combinations of these were used) to trigger the formation of coloured compounds/precipitates (this was tested with the respective metal standards).

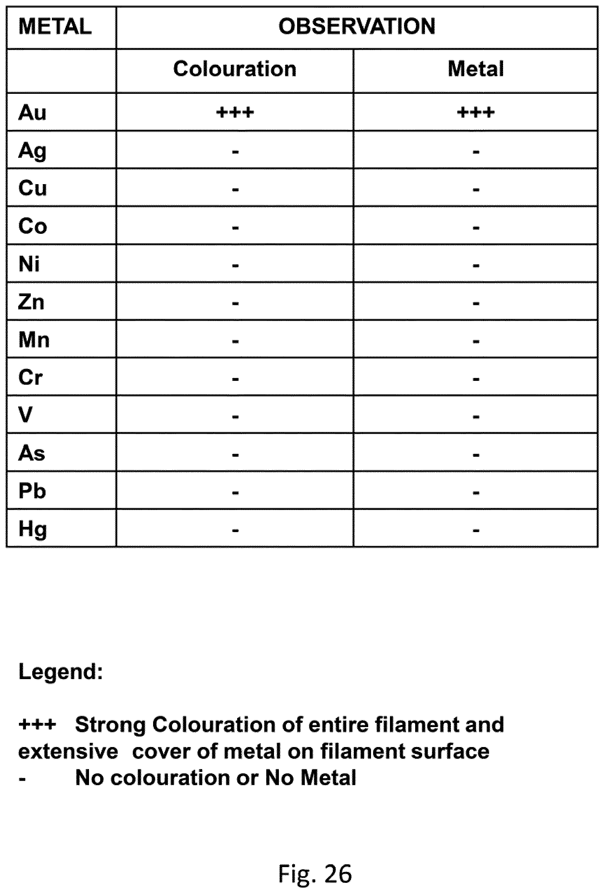

Any observable change was considered as uptake from solution by the gold extraction filaments. With the exception of Au, there was no evidence of an uptake of one of the other metals by the filaments, even when observed under the microscope at high magnification (500x). The results of the ion-specific uptake test are shown in the table given in **Fig. 26;** it was clearly visible that the filament that was put into the Au containing fluid was covered with gold, while no metal uptake was observed for the filaments that were immersed into the other metal standard solutions (i.e., Ag, Cu, Co, Ni, Zn, Mn, Cr, V, As, Pb, Hg).

This experiment clearly demonstrates that the polyamide filaments, which are used as gold extraction material in this experiment, are highly ion-specific for gold with respect to other metals typically present in acid mine drainage fluids.

In view of this teaching, a person skilled in the art will be able to arrive at other embodiments of the present invention that are not shown, without exercising inventive skill. The invention is thus not limited to the shown embodiments. It is also possible to select individual aspects of the invention or of the embodiments and combine these with one another. What is essential is the concepts underlying the invention, which a person skilled in the art having knowledge of this description will be able to carry out in a variety of ways and which nonetheless can be maintained *per se.*

REFERENCES

Anonymous (2016a): Carbon Adsorption In Recovery Of Gold From Cyanide Leach Solutions; http://mine-engineer.com/mining/minproc/carbon_ad.htm.
Anonymous (2016b): Carbon and resin technologies for gold recovery. http://www.sgs.com/en/mining/metallurgy-and-process-design/cyanidation-technologies / cyanide-leaching/carbonand-resin-technologies-for-gold-recovery.
Heinen, H.J., Peterson, D.G., and Lindstrom R.E. (1978): Processing Gold Ores Using Heap Leach-Carbon Adsorption Methods, US Department of the Interior, Bureau of Mines Information Circular, IC8770, 21pp.
Romero, A. and Sampaio, C.H. (1993): Characterization of activated carbons for the extractive metallurgy of gold. Türkiye XML Madencilik Kongresi, Extended Abstract, 427-438.

**Claims**

1. A gold extraction set-up (100, 200, 300, 400a, 400b, 500a, 500b, 500c) for gold extraction from natural, industrial or mining fluids having a volume of greater than 500 m$^3$, **characterised in that** the gold extraction set-up comprises:

    **i-a.)** a tank (101, 201, 301, 401a, 401b, 501a, 501b, 501c) comprising a tank chamber (102, 202, 302), at least one feed line (103, 203, 303) for feeding a natural, industrial or mining fluid, from which fluid gold ions comprised therein are to be extracted, into the tank chamber (102, 202, 302) via an inlet (104, 204, 304), and at least one discharge line (105, 205, 305) for discharging the fluid out of the tank chamber (102, 202, 302) via an outlet (106, 206, 306), or
    **i-b.)** a natural or artificial acid mine drainage fluid body (37, 54) having a volume of greater than 500 m$^3$ and from which fluid body gold ions comprised therein are to be extracted, and
    **ii.)** gold extraction means (107, 207, 307) removably positionable within the tank chamber (102, 202, 302) of the tank (101, 201, 301) or the natural or artificial acid mine drainage fluid body (37, 54) and comprising at least one gold extraction material (108, 208, 308) selected from the group consisting of polyamides and derivatives thereof, and mammal hair.

2. The gold extraction set-up of claim 1, **characterised in that** it comprises the tank (101, 201, 301, 501a, 501b, 501c) of i-a.) and further comprises pump/valve means in the feed/ discharge lines of the tank, and a controller for the programmed controlling of at least the pump/valve means, wherein the controller is adapted to use the pump/valve means to lead the gold-containing fluid through the feed line and via the inlet into the tank chamber, through the gold extractions means and via the outlet into the discharge line.

3. The gold extraction set-up of claim 2, **characterised in that** the tank (101, 201, 301) comprises a, preferably conical, lateral surface wall (109, 209) laterally defining the tank chamber (102, 202, 302), wherein the inlet (104, 204, 304) and the outlet (106, 206, 306) are mounted in the lateral surface wall (109, 209, 309), the outlet is located above the inlet, the gold extraction material (108, 208, 308) is positioned within the tank chamber (102, 202, 302) between the inlet and the outlet, and the controller is adapted to guide the fluid through the tank chamber and the gold extraction material in a circular movement.

4. The gold extraction set-up of claim 1, **characterised in that** the tank (101, 201) of i-a.) comprises a lateral surface wall (109, 209) laterally defining the tank chamber (102, 202), wherein the inlet (104, 204) and the outlet (106, 206) are mounted in the lateral surface wall, the outlet is located above the inlet, the gold extraction material is positioned within the tank chamber between the inlet and the outlet, wherein the lateral surface wall (109, 209) has a cylindrical shape, the feed line/inlet are arranged tangentially to the lateral surface wall and the discharge line/ outlet are arranged tangentially to the lateral surface wall and in opposite direction to the feed line/inlet, to allow a circular movement of the fluid through the tank chamber (102, 202) and the gold extraction material (108, 208).

5. The gold extraction set-up (400a, 400b) according to claims 1 or 4, **characterised in that** it is configured to leading the fluid through the feed line and via the inlet into the tank chamber and through the gold extractions means to the outlet into the discharge line solely based on gravity.

6. The gold extraction set-up according to any one of claims 1 to 5, **characterised in that** the tank chamber (102, 202) has a conical bottom (110, 210) comprising a closeable sludge removal opening (111, 211) for removing sludge accumulated in the conical bottom.

7. The gold extraction set-up according to any one of claims 1 to 6, **characterised in that** the gold extraction material (108, 208, 308) comprises at least one of the following: a granulate, a powder, a fibre, a filament, a mesh such as a netting or a cloth, a porous three-dimensional shaped body.

8. The gold extraction set up according to any one of claims 1 to 7, **characterised in that** the gold extraction material (108, 208, 308) is a polyamide selected from the group consisting of nylon 6, nylon 4.6, nylon 6.6, nylon 6.10, nylon 6.12, nylon 11, nylon 12.

9. The gold extraction set-up according to any one of claims 1 to 8, **characterised in that** the gold extraction means (107) comprises a retention support (114) for retaining the gold extraction material (108) within the tank chamber (102) or the natural or artificial acid mine drainage fluid body (37, 54).

10. The gold extraction set-up according to any one of claims 1 to 8, **characterised in that** the gold extraction means (207, 307) comprises at least one floating cartridge unit (217, 317) having a top end (218, 318) and a bottom end (219, 319), wherein the at least one floating cartridge unit (217, 317) is configured to freely float in the fluid or, with its top end, on the fluid surface, wherein the at least one floating cartridge unit (217, 317) comprises a floating element (220, 320) or a support at its top end (218, 318), wherein the gold extraction material (208, 308) is affixed to the floating element (220, 320) or to the support to allow immersion of the gold extraction material (208, 308) into the fluid present in the tank chamber (202, 302) or into the fluid of the natural or artificial acid mine drainage fluid body (37, 54), and wherein the gold extraction material (208, 308) is in the form of a fibre, a filament, a mesh such as a netting or a cloth and/or a porous three-dimensional shaped sponge-type body, preferably a folded mesh/net, more preferably an accordion-like folded mesh/net, or hanging monofilaments affixed to the floating element or the support.

11. The gold extraction set-up according to claim 10, **characterised in that** the floating cartridge unit (217, 317) further comprises a mesh-like sleeve (221, 321) surrounding the gold extraction material (208, 308), wherein the mesh-like sleeve is made from the same or a different material, preferably from the same material, as the gold extraction material.

12. The gold extraction set-up according to claim 11, **characterised in that** the floating cartridge unit (217) further comprises a collector bowl (222) on its bottom end (219).

13. A floating cartridge unit as defined in any one of claims 10 to 12, for gold extraction from natural, industrial or mining fluids, in particular for gold extraction from natural, industrial or mining fluids having a volume of greater than 500 m$^3$.

14. A metal extraction plant (430, 530) for extracting heavy metals, in particular noble metals, from natural, industrial or mining fluids having a volume of greater than 500 m$^3$, **characterised in that** the metal extraction plant comprises at least one gold extraction set-up (100, 200, 300, 400a, 400b, 500a, 500b, 500c) according to any one of claims 1 to 12 or a floating cartridge unit (217, 317) according to claim 13.

15. The metal extraction plant according to claim 14, **characterised in that** it comprises at least two gold extraction set-ups (400a, 400b, 500a, 500b, 500c), each gold extraction set-up comprising the tank (401a, 401b, 501a, 501b, 501c) of i-a.), wherein the tanks may be connected together in series or in parallel, thereby allowing the fluid to flow through the tanks in series or in parallel.

16. The metal extraction plant according to claim 14 or 15, **characterised in that** it comprises at least one heavy metal extraction device (120a, 120b, 120c, 120d, 120e) for extracting at least one heavy metal other than gold from the natural, industrial or mining fluid, wherein the at least one heavy metal extraction device (120a, 120b, 120c, 120d, 120e) is preferably adapted to extract Cu, Ag, Co, Ni and/or Zn from the fluid.

17. A method for extracting and recovering gold from a natural, industrial or mining fluid having a volume of greater than 500 m$^3$, the method comprising the consecutive steps of:

  a) providing a gold extraction set-up according to any one of claims 1 to 12 or a metal extraction plant according to any one of claims 14 to 16,
  b) feeding a natural, industrial or mining fluid, from which fluid gold ions comprised therein are to be extracted, into the tank chamber and positioning the gold extraction means within the fluid present in the tank chamber, wherein the gold extraction means preferably is a floating cartridge unit according to any one of claims 10 to 12, or
  positioning the gold extraction means within the fluid of the natural or artificial acid mine drainage fluid body, wherein the gold extraction means preferably is a floating cartridge unit according to any one of claims 10 to 12,
  c) extracting gold ions present in the fluid from the fluid by means of the gold extraction material, by letting the fluid travel through the gold extraction means for a dwell period lasting at least 1h, preferably from 1 - 11 hours,
  d) optionally transferring the extracted fluid into further heavy metal extraction devices, if present, and
  e) harvesting the gold extraction material comprising the extracted gold ions from the tank chamber or from the natural or artificial acid mine drainage fluid body.

18. The method of claim 17, wherein step e.) is followed by gold recovery step f.) comprising burning the gold extraction material in a furnace at a temperature below the melting point of gold, thereby also reducing the gold ions to elemental gold, and melting and casting the obtained elemental gold at a temperature at or above the melting point of gold.

19. The method of claim 17 or 18, wherein the extraction of gold ions of step c.) is based on selective extraction of the gold ions by the gold extraction material.

20. Use of a gold extraction set-up according to any one of claims 1 to 12, of a floating cartridge unit according to claim 13 or of a metal extraction plant according to any one of claims 14 to 16 for extracting gold from natural, industrial or mining fluids, in particular from natural, industrial or mining fluids having a volume of greater than 500 m$^3$.

Fig. 1a

Fig. 1b

Fig. 2

207    212
200
205    A    A    201
206
217    202
209
209
203    210
204
213    211
215

Fig. 3

200    203    207, 217
201
202    209
B    B
205

Fig. 4

Fig. 5

Fig. 6

Fig. 7

Fig. 8

Fig. 9

Fig. 14

Fig. 10

Fig. 11

Fig. 12

Fig. 13

Fig. 15

Fig. 17

Fig. 16

Fig. 18

**Au-containing Fluid**

Collector

**Au-reduced Fluid**

Fig. 19

Au+

Au+          Au+

**Absorption**

Au+          Au+

Au+

Fig. 20

Fig. 21

Fig. 22

Fig. 23

1000 ppm

10 ppm

19 ppm

0.5 ppm

Gold in 1 t Absorber (kg)

Needed Fluid Volume (m3)

Fig. 24

Fig. 25

| METAL | OBSERVATION | |
|---|---|---|
| | Colouration | Metal |
| Au | +++ | +++ |
| Ag | - | - |
| Cu | - | - |
| Co | - | - |
| Ni | - | - |
| Zn | - | - |
| Mn | - | - |
| Cr | - | - |
| V | - | - |
| As | - | - |
| Pb | - | - |
| Hg | - | - |

Legend:

+++ Strong Colouration of entire filament and extensive cover of metal on filament surface
- No colouration or No Metal

Fig. 26

Europäisches
Patentamt

European
Patent Office

Office européen
des brevets

# EUROPEAN SEARCH REPORT

**Application Number**

EP 19 18 5363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 096 946 A (RAINER NORMAN B [US]) 17 March 1992 (1992-03-17) * the whole document * | 1-20 | INV. C22B3/24 C22B3/00 C22B11/00 |
| X | US 8 834 816 B1 (RAINER NORMAN B [US]) 16 September 2014 (2014-09-16) * the whole document * | 1-20 | |
| A | CN 208 604 182 U (SHENZHEN QIXIN TIANZHENG ENVIRONMENTAL PROTECTION TECH CO LTD) 15 March 2019 (2019-03-15) * the whole document * | 1-20 | |
| A | JP 2013 079415 A (UNIV MIYAZAKI; ROKI TECHNO CO LTD) 2 May 2013 (2013-05-02) * the whole document * | 1-20 | |

TECHNICAL FIELDS SEARCHED (IPC)

C22B

The present search report has been drawn up for all claims

| Place of search | Date of completion of the search | Examiner |
|---|---|---|
| Munich | 19 December 2019 | Swiatek, Ryszard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

EP 3 763 838 A1

## ANNEX TO THE EUROPEAN SEARCH REPORT
## ON EUROPEAN PATENT APPLICATION NO.

EP 19 18 5363

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2019

| Patent document cited in search report | | Publication date | Patent family member(s) | Publication date |
|---|---|---|---|---|
| US 5096946 | A | 17-03-1992 | NONE | |
| US 8834816 | B1 | 16-09-2014 | NONE | |
| CN 208604182 | U | 15-03-2019 | NONE | |
| JP 2013079415 | A | 02-05-2013 | NONE | |

EPO FORM P0459

For more details about this annex : see Official Journal of the European Patent Office, No. 12/82

EP 3 763 838 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANONYMOUS.** *Carbon Adsorption In Recovery Of Gold From Cyanide Leach Solutions,* 2016, http://mine-engineer.com/mining/minproc/carbon_ad.htm
- **ANONYMOUS.** *Carbon and resin technologies for gold recovery,* 2016, http://www.sgs.com/en/mining/metallurgy-and-process-design/cyanidation-technologies / cyanide-leaching/carbonand-resin-technologies-for-gold-recovery

- Processing Gold Ores Using Heap Leach-Carbon Adsorption Methods. **HEINEN, H.J. ; PETERSON, D.G. ; LINDSTROM R.E.** Bureau of Mines Information Circular. US Department of the Interior, 1978, vol. IC8770, 21
- **ROMERO, A. ; SAMPAIO, C.H.** Characterization of activated carbons for the extractive metallurgy of gold. *Türkiye XML Madencilik Kongresi, Extended Abstract,* 1993, 427-438

33